# EUROPEAN PATENT APPLICATION

(11) **EP 2 680 407 A1**
(43) Date of publication of application: **01.01.2014**
(21) Application number: 12174253.0
(22) Date of filing: 29.06.2012
(51) Int. Cl.: H02K 5/124

(54) **Electric machine**

(71) Applicant: Alstom Technology Ltd, 5400 Baden (CH)
(72) Inventor: Berger, Axel, 79713 Bad Säckingen (DE)

(57) **Abstract**

The electric machine (1) comprises a casing (2) housing a stator (3) and a rotor (4). The rotor (4) has an active part (4a) and shafts (4b) extending from the active part (4a). Bearings (5) are provided for supporting the rotor (4) at the shafts (4b). Seals (9) are provided between the casing (2) and the bearings (5). Each seal (9) includes a first seal ring (10), a second seal ring (11), an annular chamber (12) between the first seal ring (10) and the second seal ring (11). Pipes (13) are connected to the annular chamber (12) for removing gas that leaks through the first and/or second seal rings (10, 11).

## Description

### TECHNICAL FIELD

The present disclosure relates to an electric machine.

The electric machine is in particular a rotating electric machine such as a synchronous generator to be connected to a gas or steam turbine (turbogenerator) or a synchronous generator to be connected to a hydro turbine (hydro generator) or an asynchronous generator or a synchronous or asynchronous electric motor or also other types of electric machines.

### BACKGROUND

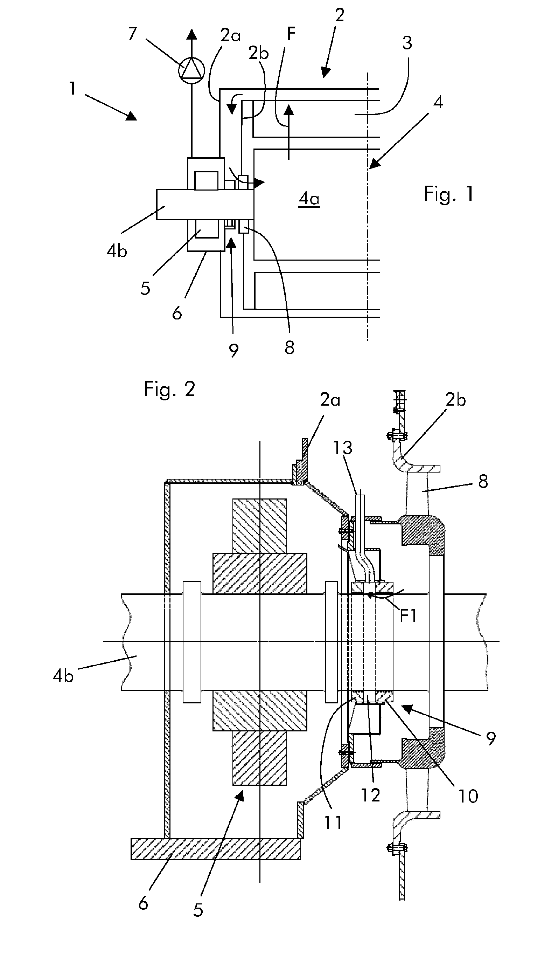

With reference to figure 1, electric machines 1 include a casing 2 (comprising and outer casing 2a and an inner casing 2b) that houses a stator 3 and a rotor 4.

The rotor 4 includes an active part 4a and shafts 4b that extend from the active part 4a outside of the casing 2.

The shafts 4b are supported by bearings 5 that are supplied with lubricant and are housed in bearing casings 6; the inside of the bearing casing 6 is usually connected to a vacuum pump 7.

Reference 8 in figure 1 defines a fan for circulating a gas contained in the casing 2 (this is also the electric machine cooling gas and preferably it is air) between the outer casing 2a and the inner casing 2b (see arrows F).

In order to prevent the gas contained in the casing 2 from entering the bearing casings 6, seals 9 are provided between the casing 2 and the bearing casing 6, to prevent leakages at the shafts 4b.

The seals 9 include two seal rings 10, 11 with an annular chamber 12 inbetween.

Even if the seals 9 proved to be satisfactory during operation, improvement of their sealing effect is desired, because for example when the gas contained in the casing has a high pressure or when the sucking at the bearing casing is strong, gas could enter the bearing casing.

When gas enters the bearing casing it mixes with the lubricant such that the flow through the lubricant pumps can become higher than the design flow. This could cause reliability problems at the pumps and can also lead to pump breakage.

### SUMMARY

An aspect of the disclosure includes providing an electric machine with reduced risk that gas moves from the casing into the bearing casings.

These and further aspects are attained by providing an electric machine in accordance with the accompanying claims.

### BRIEF DESCRIPTION OF THE DRAWINGS

Further characteristics and advantages will be more apparent from the description of a preferred but non-exclusive embodiment of the electric machine, illustrated by way of non-limiting example in the accompanying drawings, in which:
Figure 1 is a schematic view of an electric machine,
Figure 2 shows a seal and bearing casing;
Figures 3 and 4 show a front view and a cross section through line IV-IV of a seal;
Figure 5 shows a detail of a lubricant scraper; and

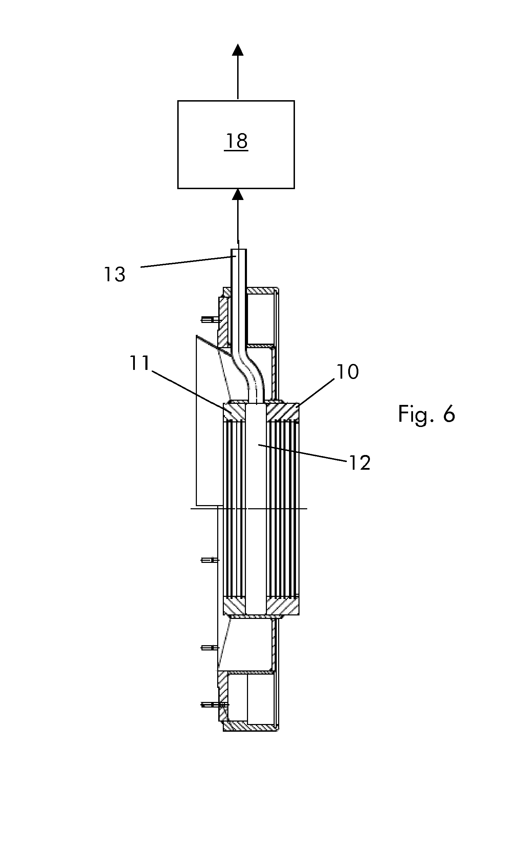

Figure 6 shows a cross section of a seal is a further embodiment.

### DETAILED DESCRIPTION OF EXEMPLARY EMBODIMENTS

The electric machine 1 such as an electric generator has a casing 2 that includes an outer casing 2a and an inner casing 2b. The outer casing 2a and inner casing 2b define the cooling fluid path between each other for a cooling gas such as air contained in the casing 2; in the following reference to air as a cooling gas is made.

The casing 2 houses the stator 3 and rotor 4; in particular the stator 3 is housed in the inner casing 2b and the rotor 4 has the active part 4a housed in the inner casing, and shafts 4b that protrude from the active part 4a, and pass through apertures of the inner casing 2b and outer casing 2a.

Bearings 5 are provided for supporting the rotor 4 at the shafts 4b. The bearings are housed in bearing casings 6.

In addition, seals 9 are provided between the casing 2 and the bearing casings 6. In particular, each seal 9 is housed inside the outer casing 2a and is provided around each shaft 4b preferably connected to the bearing casing 6 at a zone thereof that is penetrated by the shaft 4b.

The seals 9 include a first seal ring 10, a second seal ring 11 and an annular chamber 12 between the first seal ring 10 and the second seal ring 11.

In addition, one or more pipes 13 are connected to the annular chamber 12 for removing the gas that leaks through the first and/or second seal rings 10, 11.

In different examples, pipes 13 open in the ambient (i.e. outside of the casing 2 and bearing casing 6); with this solution it is possible to remove gas that accumulates (at high pressure, high meaning higher than the atmospheric pressure) in the annular chamber 12.

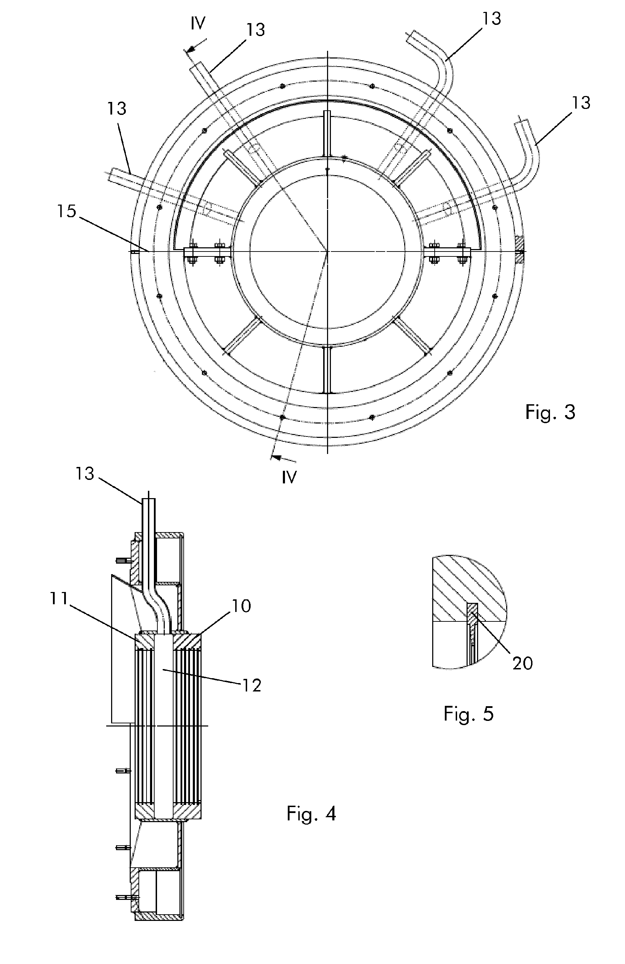

With reference to figure 3, a horizontal plane 15 divides the annular chamber 12 (and the seal 9) in an upper part and a lower part.

As shown in the figures, a plurality of pipes 13 is preferably provided; these pipes 13 are distributed over the annular chamber 12.

In this case preferably all pipes 13 open at the upper part of the annular chamber 12. This solution helps assembling.

The pipes 13 can also be connected to a sucker 18.

Figure 4 shows an example of the seal 9 with the first and second seal rings 10, 11 and figure 5 show a detail of a lubricant scraper 20.

In particular, each of the first seal ring 10 and the second seal ring 11 includes a plurality of lubricant scrapers 20.

The first seal ring 10 that faces the casing 2 and the second seal ring 11 that faces a bearing 5 can have a different number of scrapers; for example the first seal ring 10 includes a larger number of lubricant scrapers 20 than the second seal ring 11.

The operation of the electric machine is apparent from that described and illustrated and is substantially the following.

During operation the fan 8 circulates the gas contained in the casing 2 (this gas is preferably air and is the cooling gas for the electric machine); in particular the fan 8 moves the gas into the inner casing 2b where it cools the stator and rotor to then pass through cooling channels of the stator and enter the outer casing 2a (see arrows F).

Because of the pressure in the outer casing 2a and/or because of the sucking at the bearing casing 6, gas could leak through the seal ring 10 (i.e. the seal ring facing the casing 2, see arrow F1) entering the chamber 12. From the chamber 12 the gas is removed via the pipes 13 and released to the atmosphere.

This prevents the gas from entering the bearing casing 6 and mix with the lubricant, causing reliability problems at the bearings 5.

Naturally the features described may be independently provided from one another.

In practice the materials used and the dimensions can be chosen at will according to requirements and to the state of the art.

### REFERENCE NUMBERS

- 1: electric machine
- 2: casing
- 2a: outer casing
- 2b: inner casing
- 3: stator
- 4: rotor
- 4a: active part of 4
- 4b: shaft of 4
- 5: bearing
- 6: bearing casing
- 7: vacuum pump
- 8: fan
- 9: seal
- 10: seal ring
- 11: seal ring
- 12: chamber
- 13: pipe
- 15: horizontal plane
- 18: sucker
- 20: lubricant scraper
- F: air
- F1: leakage

## Claims

1. An electric machine (1) comprising:
a casing (2) housing a stator (3) and a rotor (4),
the rotor (4) having an active part (4a) and shafts (4b) extending from the active part (4a),
bearings (5) for supporting the rotor (4) at the shafts (4b),
at least a seal (9) between the casing (2) and the bearings (5),
wherein the at least a seal (9) includes:
a first seal ring (10),
a second seal ring (11),
an annular chamber (12) between the first seal ring (10) and the second seal ring (11),
**characterised by** further comprising at least a pipe (13) connected to the annular chamber (12) for removing gas that leaks through the first and/or
second seal rings (10, 11).

2. The electric machine (1) according to claim 1, **characterised in that** the at least a pipe (13) opens in the ambient.

3. The electric machine (1) according to claim 2, **characterised in that** a horizontal plane (15) divides the annular chamber (12) is an upper part and a lower part, wherein the at least a pipe (13) opens at the upper part of the annular chamber (12).

4. The electric machine (1) according to claim 1, **characterised in that** the at least a pipe (13) is connected to a sucker (18).

5. The electric machine (1) according to claim 1, **characterised in that** the at least a pipe (13) includes a plurality of pipes (13) distributed over the annular chamber (12).

6. The electric machine (1) according to claim 5, **characterised in that** a horizontal plane (15) divides the annular chamber (12) in an upper part and a lower part, wherein all pipes (13) open at the upper part of the annular chamber (12).

7. The electric machine (1) according to claim 1, **characterised in that** each of the first seal ring (10) and second seal ring (11) includes a plurality of lubricant scrapers (20).

8. The electric machine (1) according to claim 7, **characterised in that** the first seal ring (10) faces the casing (2) and the second seal ring (11) faces a bearing (5), wherein the first seal ring (10) includes a larger number of lubricant scrapers (20) than the second seal ring (11).

9. The electric machine (1) according to claim 1, **characterised by** being an electric generator.
